# FASCICULE DE BREVET EUROPEEN

(11) **EP 3 580 040 B1**
(45) Date de publication et mention de la délivrance du brevet: **07.06.2023**
(21) Numéro de dépôt: 17729004.6
(22) Date de dépôt: 10.02.2017
(51) Int. Cl.: B29C 63/02, B29C 63/00, B29L 31/00

(54) **MACHINE INDUSTRIELLE D'APPLICATION VERTICALE DE FILMS DE PROTECTION TEMPORAIRE OU PERMANENT SUR SURFACES PLANES**
INDUSTRIELLE MASCHINE ZUR SENKRECHTEN AUFTRAGUNG VON VORÜBERGEHENDEN ODER PERMANENTEN SCHUTZFILMEN AUF EBENE OBERFLÄCHEN
INDUSTRIAL MACHINE FOR VERTICALLY APPLYING TEMPORARY OR PERMANENT PROTECTION FILMS ON FLAT SURFACES

(43) Date de publication de la demande: 18.12.2019
(73) Titulaire: WALCO, 69330 Meyzieu (FR)
(72) Inventeur: MILIOTI, Stéphane, 69740 Genas (FR)
(74) Mandataire: Cabinet Beau de Loménie
(86) Numéro de dépôt international: PCT/EP2017/000208
(87) Numéro de publication internationale: WO 2018/145721

(56) Documents cités:
- EP-A1- 0 316 224
- EP-A1- 1 884 346
- EP-A1- 3 034 275
- US-A1- 2003 087 592
- US-A1- 2016 176 171

## Description

L'invention est relative à une machine industrielle d'application verticale de films de protection temporaire ou permanent sur surfaces planes disposant d'un système automatique de découpe du film, de positionnement bord à bord ou avec marge (notamment dans le cadre du pelliculage de vitres, aux fins de monter le vitrage sur le bâti de portes ou fenêtres sans altérer la protection provisoire ; la vitre ayant reçue une réservation) agissant simultanément sur les deux faces et s'adaptant automatiquement aux changements de format des pièces à traiter, selon un procédé électrostatique de tenue en position du film sur le rouleau applicateur.

### Etat des sachant :

### Besoins :

Les besoins en pelliculage provisoire ou permanent double face se présentent dans de nombreuses activités industrielles, notamment dans le domaine de l'industrie verrière du bâtiment.

Majoritairement les industriels verriers du bâtiment vendent leur verre sans protection provisoire, celle-ci pouvant être placée (ce qui n'est pas une obligation) à postériori soit par le fabricant de fenêtre qui a placé le verre sur le bâti de l'ouvrage fini prêt à être installé, soit encore par l'entreprise de bâtiment en charge de l'ouvrage. Les opérations de protection des ouvrages nécessitent beaucoup de main d'ceuvre et représentent un coût important en raison de l'application rendue manuelle du fait de l'installation sur le bâti. D'autre part, avant le montage des menuiseries et l'installation sur le chantier de construction, les vitrages sont transportés, stockés et manipulés à plusieurs reprises créant autant de risques de rayure ou d'altération. En conséquence le taux de non-conformité dû aux désagréments des vitrages sur chantiers est important, en raison des altérations provoquées par le manque de protection temporaire.

Pour limiter la non qualité résultant de ces désagréments, des industriels verriers (et d'autres secteurs d'activités fournissant des ouvrages planes) souhaitent placer des films temporaires en usine de façon automatique et sans altérer la productivité sur la ligne de fabrication. C'est pourquoi ils sont intéressés à trouver une solution de pelliculage simultanée aux deux faces du vitrage, avec une réservation sur tout le périmètre de la vitre en ce que le film de protection temporaire doit être installé sur son bâti sans avoir à retirer une partie de la protection temporaire. En effet le périmètre du vitrage vient s'encastrer dans la feuillure des menuiseries (ou son équivalent) qui emprisonne le verre et lui permet de se maintenir dans l'ouvrage. Il importe donc que l'application d'un film de protection temporaire s'arrête à la dimension du périmètre de vitrage une fois celui-ci encastré, sans quoi le film de protection serait pincé entre le vitrage et la menuiserie, empêchant au film de s'enlever facilement à la fin du chantier.

Les industriels verriers ont une autre contrainte en ce que les produits verriers fabriqués sont constamment de dimensions différentes, et que la fabrication intervient en continue quel que soit les dimensions demandées, de telle façon que les vitres sortent de fabrication les unes après les autres quelques soient les dimensions (les lignes d'assemblages de vitrages sont conçues pour la fabrication de grandes quantités de produits avec des dimensions différentes, et pas pour de grandes séries de vitrages d'une même dimension ; tandis qu'elles produisent généralement un vitrage en moins d'une minute). Il importe donc que durant le cycle de fabrication, la technologie de filmage automatisée détecte d'elle-même la dimension de la vitre et qu'elle place la protection sur les deux faces sans aucune intervention humaine.

Une autre contrainte pour les industriels verriers tient au fait que pour des gains évidents de places au sol, les fabricants de vitrage fabriquent, stockent et manutentionnent généralement leurs produits de façon verticale ; ce qui indique que le procédé de pelliculage doit se réaliser de façon à acheminer, filmer et libérer les substrats de façon verticale, généralement incliné à 6°.

### En matière de technologies existantes :

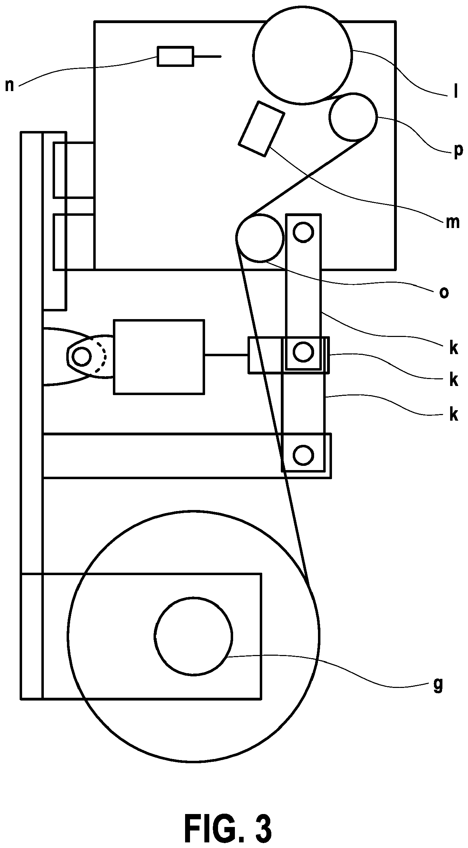

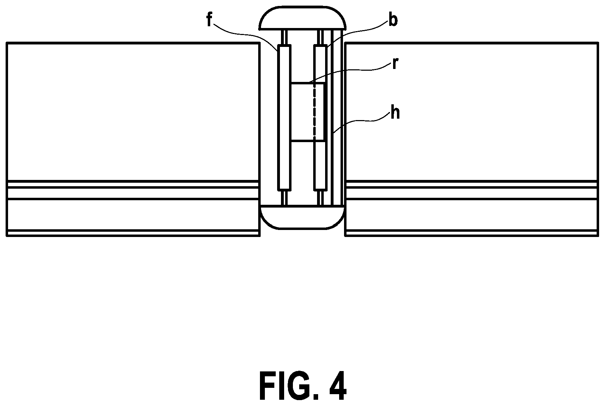

En l'état de la connaissance, nous distinguons quatre technologies se rapportant partiellement à la présente invention (filmage provisoire en position plus ou moins verticale avec réserves périphériques), sachant qu'aucune ne répond au principe de pelliculage simultané sur les deux faces :
- La première technologie a fait l'objet d'un brevet N° FR2852553 est relative à un procédé vertical de dépose de films sur des substrats tels que plaques de verres, pouvant démarrer le pelliculage à une distance des bords de la vitre, se caractérisant en ce que le film est constitué de plusieurs laizes (selon la dimension de l'ouvrage) et posé en autant de bandes qu'il est nécessaire, avec une technologie de maintien du film en position par aspiration (revendication 19) et un autre dispositif de coupe du film par fil chauffant (revendication 20). Cette technologie comporte plusieurs inconvénients en ce que le film n'est pas tenu avec une extrême précision, ce qui occasionne une tolérance de position du film sur le vitrage large. Il y a de plus la nécessité d'un rouleau finisseur qui tient au fait que la technologie de tenue de film par aspiration ne permet pas d'obtenir une bonne application du film sur sa partie en contact avec la rampe d'aspiration. De plus le principe de coupe du film à chaud ne permet pas une coupe précise en raison de la brulure du film qui créé des mini vagues sur le film à l'endroit de la coupe. Enfin le brevet indique que la technologie pourrait intervenir en application simple ou double face, sans qu'il soit précisé la façon d'y parvenir, au point qu'aucune revendication ne permet d'alléguer une technologie permettant d'aboutir au recouvrement des deux faces en simultané.
- Un second brevet US 7691220 a été déposé par le même inventeur à la suite du premier brevet (même figure 3) détaille la technologie de dépose du film avec tenue de celui-ci par rampe d'aspiration et le principe de coupe à chaud, cette technologie étant très différente de celle de la présente demande qui repose sur un principe électrostatique qui présente une meilleure précision de coupe et des temps de traitement plus rapides puisqu'il n'est plus besoin d'avoir l'intervention d'un rouleau finisseur.
   · Une troisième technologie (qui n'a pas fait l'objet de protections industrielles) est également basée sur les principes comparables de dépose de film avec gestion des marges de vitres. Elle a été mise en oeuvre par la société Cardinal (US) selon un procédé similaire de dépose de laizes, le substrat était positionné plus ou moins verticalement comme pour les autres technologies. En revanche la grande distinction avec les précédentes technologies est que le module de pelliculage se déplace sur le verre (alors que sur les autres inventions, c'est le verre qui se déplace sous le module de pelliculage). En aucun cas, cette machine ne permet d'obtenir un pelliculage des deux faces qu'il soit ou non instantané.
   · La quatrième technologie (et celle qui se rapporte le plus au présent brevet) a été déposée par le présent inventeur sous le N° de demande 1601085. Elle se rapporte à une machine industrielle d'application de films de protection temporaire ou permanent à l'horizontale disposant d'un système automatique de découpe, de positionnement et d'application du film sur le support à traiter selon un procédé "bord à bord" sans constituer de déchet de film ou de bavette, caractérisé par: Un module de pelliculage doté d'un rouleau applicateur, d'une barre de charge électrostatique, d'un module de coupe pour couper le film, d'un contre rouleau, d'un vérin supportant le module de pelliculage; et d'autres modules de détour de compensateur, de systèmes de convoyage et de positionnement du substrat, et d'un asservissement approprié. Cette machine, qui intègre une technologie de tenue de film électrostatique, se distingue de la présente invention en ce que le pelliculage s'effectue en une face de façon horizontale (elle est destinée à d'autres applications que les produits verriers planes). En revanche des principes technologiques sont proches en ce que l'on y retrouve le procédé de tenue et de positionnement électrostatique du film, ainsi qu'un module de pelliculage qui la compose comparable à quelques détails.

La demande de brevet EP 1 884 346 décrit une machine permettant d'appliquer en continu des films de protection sur les deux faces de pièces en verre à recouvrir. Cette machine comporte deux modules de pelliculage disposés de part et d'autre des pièces à pelliculer. Les pièces en verre sont ensuite découpées aux mesures souhaitées.

La demande de brevet US 2016/176171 décrit un procédé et un système pour appliquer un matériau de masquage sur un substrat plan comprenant un poste d'application du matériau de masquage où un matériau de masquage est appliqué sur un rouleau applicateur et un poste de transfert où au moins une partie du matériau de masquage est transférée du rouleau à une surface d'une pièce plane. Selon un mode de réalisation, le rouleau applicateur peut utiliser une force électrostatique pour maintenir le matériau de masquage en contact avec le rouleau.

La demande de brevet EP 0 316 224 décrit un dispositif pour l'assemblage de vitrages feuilletés mettant en oeuvre notamment une feuille manipulée par un système de préhension mettant en oeuvre par exemple une aspiration ou un placage électrostatique.

La demande de brevet US 20003/087592 décrit un procédé pour revêtir une pièce à l'aide d'un matériau de masquage consistant à prédécouper un masque dans la feuille de matériau de masquage avant d'assurer l'application de la pièce sur le masque afin d'assurer le détachement du masque par rapport à la feuille de matériau de masquage.

La demande de brevet EP 3 034 275 décrit également une machine de masquage pour déposer sur des panneaux de vitrage, un masque de protection.

En conséquence c'est aux fins de répondre aux besoins d'une application verticale de films de protection temporaire ou permanent sur surfaces planes, tout en disposant d'un système automatique de découpe, de positionnement bord à bord ou avec marge agissant simultanément sur les deux faces et s'adaptant automatiquement aux changements de format des pièces à traiter, selon un procédé de positionnement et de maintien du film électrostatique, que la présente invention est déposée. Elle se veut d'apporter:
· Une application simultanée sur les deux faces avec ou sans réservation de marges;
· Une meilleure précision de coupe que les technologies à aspiration et de coupe à chaud;
· La rapidité nécessaire pour s'intégrer dans une chaîne de fabrication sans altérer sa productivité.

### Présentation de l'invention:

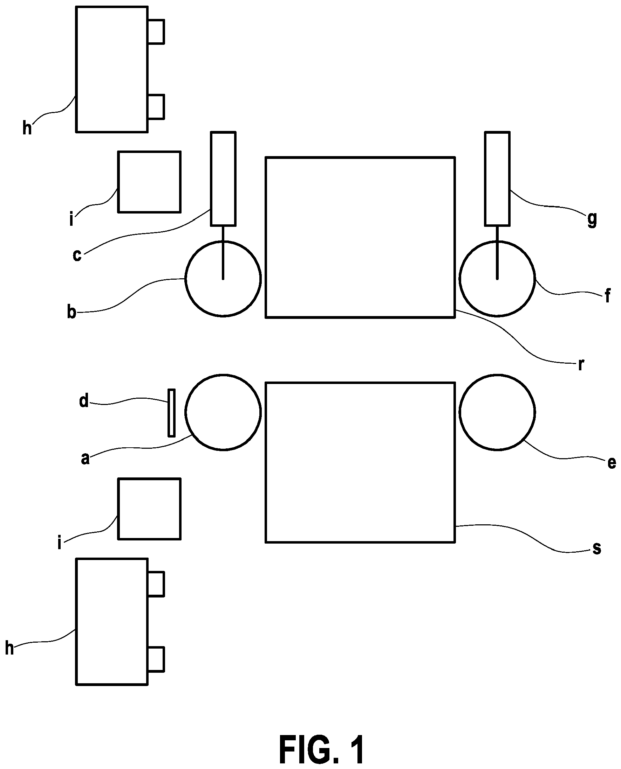

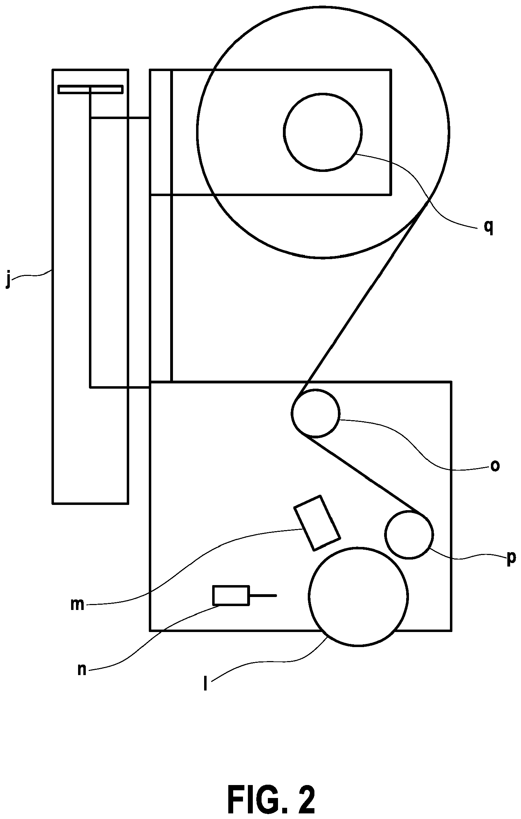

L'invention est relative à une machine industrielle d'application verticale de films de protection temporaire ou permanent sur surfaces planes disposant d'un système automatique de découpe du film, de positionnement bord à bord ou avec marge (notamment dans le cadre du pelliculage de vitres, aux fins de monter le vitrage sur le bâti de portes ou fenêtres sans altérer la protection provisoire; la vitre ayant reçue une réservation) agissant simultanément sur les deux faces et s'adaptant automatiquement aux changements de format des pièces à traiter, selon un procédé de positionnement et de maintien en position du film sur le rouleau applicateur par charge électrostatique, se caractérisant par :
- Une structure d'ensemble (figure 1), dit aussi bâtit, composée de :
   ∘ Au moins un rouleau introducteur motorisé (a) en position fixe et ou moins un rouleau introducteur libre (b) et mobile horizontalement actionné par des vérins (c), symétrique(s) au(x) rouleau(x) motorisé(s), pour convoyer et positionner le produit à protéger en entrée.
   ∘ Une cellule de détection (d) après le ou les rouleaux introducteurs (a et b) pour déterminer la position du substrat.
   ∘ Au moins un rouleau éjecteur motorisé en position fixe (e) et au moins un rouleau éjecteur libre et mobile (f) se déplaçant horizontalement et actionné par vérin(s) (g), symétrique(s) au(x) rouleau(x) motorisé(s), pour convoyer et positionner le produit à protéger en sortie.
   ∘ Deux poutres verticales avec guidages linéaires (h) et deux ensembles de déplacements verticaux (i) pour le mouvement et le positionnement vertical des modules de pelliculage (figures 2 et 3).
- De deux modules de pelliculage conçus selon la technologie de la demande de brevet N° 1601085, soit :
   ∘ Un module de pelliculage face avant (r) (figure 2) monté sur vérin avec un guidage linéaire (j) pour se positionner horizontalement à la distance nécessaire en fonction de l'épaisseur du substrat à protéger et exercer la pression adéquate de laminage.
   ∘ Un module de pelliculage face arrière (s) (figure 3) mobile sur un système de biellettes (k) comportant deux positions : rentré (le module n'est pas au contact du substrat), sortie (il est positionné au point zéro), le rouleau applicateur (I) étant parallèle et dans le prolongement des rouleaux introducteur (a) et éjecteur (e) pour laminer le substrat.
- Un automate doté d'un programme appelé à piloter les différents modules de la machine en fonction de la dimension des supports à traiter.

Chaque module de pelliculage (r et s) est composé de :
- Un rouleau applicateur (I) qui lamine le film sur le support.
- Une barre de charge électrostatique (m) connectée à un générateur de charge, et positionnée à une distance entre 5 et 25 mm du rouleau applicateur (I), permettant au film d'adhérer au rouleau applicateur (I) en conservant précisément sa position.
- Un module de coupe (n) destiné à couper le film en contact avec le rouleau applicateur (I) à une distance de l'axe inférieur du rouleau équivalente à la distance entre l'axe inférieur du rouleau applicateur (I) et le bord arrière du substrat plus la marge (dite aussi réservation) qui devra être conservée conformément aux paramétrages de l'opérateur.

- Un rouleau de détour (o) qui permette de conserver un angle précis entre la bobine de film et le rouleau applicateur (I).
- Un contre rouleau en silicone (p) qui augmente la surface de contact entre le film et le rouleau applicateur (I) aux fins de positionner le film sous la barre de charge et maintenir le film sur le rouleau (I).
- Un mandrin porte bobine de film (q) équipé d'un système de frein de déroulage.

Au regard de la demande de brevet N° 1601085, le module de pelliculage (r et s) se distingue en ce qu'il intègre le rouleau de détour (o) et le mandrin porte bobine (q).

Le fonctionnement de la machine est le suivant :
- L'opérateur dépose un vitrage sur le convoyeur d'entré et lance le cycle.
- Le verre se déplace vers la machine, celle ayant été informée par d'autres moyens (détection automatique, information de la ligne ou de l'opérateur) permettant de calculer le nombre de laizes nécessaire au recouvrement complet du vitrage.
- Les deux modules de pelliculage (r et s) (figure 2 et 3) se positionnent à une certaine hauteur, de manière à ce que la partie basse de la bobine de film soit à la hauteur du bord bas du vitrage additionné de la hauteur de la marge (qui restera non protégée pour le montage des menuiseries).
- Le verre se déplace latéralement, les rouleaux introducteurs (a et b) se referment et positionnent le vitrage entre les deux modules de pelliculage (r et s) (figures 2 et 3), bord du verre à une distance de l'axe des rouleaux applicateurs (I) équivalente à la marge qui doit rester libre pour le montage futur des menuiseries (information indiquée sur le panneau de commande), le bord du film étant positionné dans l'axe des rouleaux applicateurs (I).
- Le module de pelliculage face arrière (s) (figure 3) avance pour se positionner au point zéro, dans l'alignement des rouleaux introducteurs (a et b) et éjecteurs (e et f), en contact avec le produit à protéger.
- Le module de pelliculage face avant (r) (figure 2) se referme, positionnant le rouleau applicateur (I) en contact avec le verre à protéger.
- Les rouleaux introducteurs (a et b) déplacent latéralement le verre, l'application du film se fait de part et d'autre.
- Une cellule (d) détecte le bord arrière du verre, les rouleaux éjecteurs (e et f) prennent le relai des rouleaux introducteur (a et b) et positionnent le verre, bord arrière à une distance de l'axe du rouleau applicateur (I) équivalente à la distance entre l'axe du rouleau applicateur et le point de coupe plus la partie du verre qui doit rester non filmée.
- Le module de coupe (n) se met en marche et coupe le film.
- Les rouleaux éjecteurs (e et f) positionnent le verre, bord arrière à une distance de l'axe du rouleau applicateur (I) équivalente à la marge qui doit rester non filmée.
- Les modules de pelliculage (r et s) (figures 2 et 3) s'ouvrent, le verre recule, pendant que les mêmes modules se positionnent à la bonne hauteur pour appliquer la bande suivante.
- Le cycle recommence.

### Figures :

1/4 vue de la structure sans la pelliculeuse
2/4 module de pelliculage avant
3/4 module de pelliculage arrière
4/4 machine assemblée dotée de convoyeurs introducteur et éjecteur

### Glossaire :

a) rouleau introducteur motorisé
b) rouleau introducteur libre
c) vérin rouleau introducteur
d) cellule de détection
e) rouleau éjecteur motorisé en position fixe
f) rouleau éjecteur libre et mobile
g) vérin rouleau éjecteur
h) poutres verticales avec guidages linéaires
i) ensembles de déplacements verticaux
j) guidage linéaire module de pelliculage avant
k) système de biellettes module pelliculage arrière
l) rouleau applicateur
m) barre de charge électrostatique
n) module de coupe
o) rouleau de détour
p) contre rouleau en silicone
q) porte bobine de film
r) module de pelliculage avant
s) module de pelliculage arrière

## Revendications

1. Machine industrielle d'application verticale de films de protection temporaire ou permanent, simultanément sur les deux surfaces planes des faces avant et arrière de produits à protéger, avec découpe automatique des films et positionnement bord à bord ou avec marge, et adaptation automatique aux changements de format, cette machine comportant :
▪ une structure d'ensemble dotée d'un système de convoyage et de positionnement du produit à protéger comportant :
. au moins un rouleau introducteur motorisé (a) en position fixe et au moins un rouleau introducteur libre (b) et mobile horizontalement actionné par des vérins (c), le rouleau introducteur libre (b)étant symétrique par rapport au rouleau introducteur motorisé (a) pour convoyer et positionner le produit à protéger en entrée ;
. au moins un rouleau éjecteur motorisé en position fixe (e) et au moins un rouleau éjecteur libre et mobile (f) se déplaçant horizontalement et actionné par des vérins (g), le rouleau éjecteur libre et mobile (f) étant symétrique par rapport au rouleau éjecteur motorisé pour convoyer et positionner le produit à protéger en sortie,
. une cellule de détection (d) après le ou les rouleaux introducteurs (a) et (b) pour déterminer la position du produit à protéger et du bord arrière du produit à protéger;
. deux poutres verticales avec guidages linéaires (h) et deux ensembles de déplacements verticaux (i) pour le mouvement et le positionnement vertical de modules de pelliculage (r, s) ;
▪ deux modules de pelliculage (r) et (s) placés sur les poutres verticales de guidages linéaires de la structure pour assurer leurs déplacements verticaux et horizontaux, un module assurant le pelliculage de la face avant du produit à protéger tandis que l'autre module assure le pelliculage de la face arrière du même produit à protéger, chaque module de pelliculage comportant :
. un rouleau applicateur (1) qui lamine le film sur le produit à protéger à partir de son axe inférieur et qui maintient en position le film sur le rouleau applicateur par charge électrostatique ;
· un module de coupe (n) destiné à couper le film en contact avec le rouleau applicateur (1) à une distance de l'axe inférieur du rouleau applicateur, équivalente à la distance entre l'axe inférieur du rouleau applicateur et le bord arrière du produit à protéger plus la marge ;
▪ un automate doté d'un programme appelé à piloter les différents modules de la machine en fonction de la dimension des produits à protéger, pour chaque produit à protéger, l'automate pilotant:
. le rouleau introducteur motorisé (a) pour déplacer latéralement le produit à protéger afin de le positionner entre les deux modules de pelliculage (r) et (s), avec le bord du produit à protéger à une distance de l'axe des rouleaux applicateurs (1), équivalente à la marge qui doit rester libre, le bord du film étant positionné dans l'axe des rouleaux applicateurs (1),
.les deux modules de pelliculage (r) et (s) pour permettre le pelliculage des faces avant et arrière du produit à protéger,
.le rouleau introducteur motorisé (a) pour déplacer latéralement le produit à protéger afin d'assurer le pelliculage de ses faces avant et arrière,
.le rouleau éjecteur (e) pour positionner le bord arrière du produit à protéger à une distance de l'axe du rouleau applicateur (1) équivalente à la distance entre l'axe inférieur du rouleau applicateur et le point de coupe, plus la marge,
.le module de coupe pour couper le film,
.le rouleau éjecteur (e) pour positionner le bord arrière à une distance de l'axe du rouleau applicateur (1) équivalente à la marge,
. et les deux modules de pelliculage (r) et (s) en ouverture pour libérer le produit.

2. Machine industrielle selon la revendication 1, **caractérisée en ce que** chaque module de pelliculage (r) et (s)comporte :
▪ une barre de charge électrostatique (m) connectée à un générateur de charge, et positionnée à une distance entre 5 et 25 mm du rouleau applicateur (1), permettant au film d'adhérer au rouleau applicateur (1) en conservant précisément sa position ;
▪ un rouleau de détour (o) qui permette de conserver un angle précis entre la bobine de film et le rouleau applicateur (1) ;
▪ un contre rouleau en silicone (p) qui augmente la surface de contact entre le film et le rouleau applicateur (1) aux fins de positionner le film sous la barre de charge et maintenir le film sur le rouleau (1) ;
▪ un mandrin porte bobine de film (q) équipé d'un système de frein de déroulage.

3. Machine industrielle selon la revendication 2, **caractérisée en ce que** le module de pelliculage face avant (r) est monté sur vérin avec un guidage linéaire (j) pour se positionner horizontalement à la distance nécessaire en fonction de l'épaisseur du produit à protéger et exercer la pression adéquate de laminage.

4. Machine industrielle selon la revendication 1, **caractérisée en ce que** le module de pelliculage face arrière (s) mobile sur un système de biellettes (k) comporte deux positions : rentrée lorsque le module n'est pas au contact du produit à pelliculer, sortie lorsque positionné au point zéro, le rouleau applicateur (1) étant parallèle et dans le prolongement des rouleaux introducteur (a) et éjecteur (e) pour laminer le produit à protéger.

5. Procédé d'application de films de protection temporaire ou permanent utilisant une machine selon la revendication 1, **caractérisé en ce que** le pilotage automatisé des différents modules et composants de la machine intervient selon l'ordre suivant :
▪ l'opérateur dépose en tant que produit à protéger, un vitrage et lance le cycle ;
▪ le verre se déplace vers la machine, celle-ci ayant été informée par d'autres moyens permettant de calculer le nombre de laizes nécessaire au recouvrement complet du vitrage ;
▪ les deux modules de pelliculage (r) et (s) se positionnent à une certaine hauteur, de manière à ce que la partie basse de la bobine de film soit à la hauteur du bord bas du vitrage additionné de la hauteur de la marge ;
▪ le verre se déplace latéralement, les rouleaux introducteurs (a) et (b) se referment et positionnent le vitrage entre les deux modules de pelliculage (r) et (s), avec le bord du verre à une distance de la verticale de l'axe des rouleaux applicateurs (1), équivalente à la marge qui doit rester libre pour le montage futur des menuiseries, le bord du film étant positionné dans l'axe des rouleaux applicateurs (1) ;
▪ le module de pelliculage face arrière (s) avance pour se positionner au point zéro, dans l'alignement des rouleaux introducteurs (a) et (b) et éjecteurs (e) et (f), en contact avec le verre ;
▪ le module de pelliculage face avant (r) (se referme, positionnant le rouleau applicateur (1) en contact avec le verre à protéger ;
▪ les rouleaux introducteurs (a) et (b) déplacent latéralement le verre, l'application du film se fait de part et d'autre ;
▪ une cellule (d) détecte le bord arrière du verre, les rouleaux éjecteurs (e) et (f) prennent le relai des rouleaux introducteurs (a) et (b) et positionnent le verre, bord arrière à une distance de l'axe du rouleau applicateur (1) équivalente à la distance entre l'axe inférieur du rouleau applicateur et le point de coupe plus la partie du verre qui doit rester non filmée ;
▪ le module de coupe (n) se met en marche et coupe le film ;
▪ les rouleaux éjecteurs (e) et (f) positionnent le verre, bord arrière à une distance de l'axe du rouleau applicateur (1) équivalente à la marge qui doit rester non filmée ;
▪ les modules de pelliculage (r) et (s) s'ouvrent, le verre recule, pendant que les mêmes modules se positionnent à la bonne hauteur pour appliquer la bande suivante ;
▪ le cycle recommence.

## Patentansprüche

1. Industrielle Maschine zur senkrechten Aufbringung von vorübergehenden oder permanenten Schutzfolien gleichzeitig auf die zwei ebenen Oberflächen der Vorder- und Rückseite zu schützender Produkte mit automatischem Zuschnitt der Folien und Kante-an-Kante-Positionierung oder mit Rand und automatischer Anpassung an Formatänderungen, wobei diese Maschine aufweist:
▪ eine Gesamtstruktur, die mit einem Transport- und Positionierungssystem des zu schützenden Produkts versehen ist, aufweisend:
· mindestens eine motorisierte Einführwalze (a) an fester Position und mindestens eine freie und horizontal bewegliche Einführwalze (b), die von Zylindern (c) betätigt wird, wobei die freie Einführwalze (b) im Verhältnis zur motorisierten Einführwalze (a) symmetrisch ist, um das zu schützende Produkte zu transportieren und am Eingang zu positionieren;
· mindestens eine motorisierte Auswurfwalze an fester Position (e) und mindestens eine freie und bewegliche Auswurfwalze (f), die sich horizontal bewegt und von Zylindern (g) betätigt wird, wobei die freie und bewegliche Auswurfwalze (f) im Verhältnis zur motorisierten Auswurfwalze symmetrisch ist, um das zu schützende Produkt zu transportieren und am Ausgang zu positionieren,
· eine Detektionszelle (d) nach der oder den Einführwalzen (a) und (b), um die Position des zu schützenden Produkts und der hinteren Kante des zu schützenden Produkts zu bestimmen;
· zwei vertikale Balken mit linearen Führungen (h) und zwei Vertikalverlagerungseinheiten (i) für die Bewegung und die vertikale Positionierung von Laminiermodulen (r, s);
▪ zwei Laminiermodule (r) und (s), die auf den vertikalen Balken mit linearen Führungen der Struktur platziert sind, um deren vertikale und horizontale Verlagerungen zu sichern, wobei ein Modul das Laminieren der Vorderseite des zu schützenden Produkts sichert, wohingegen das andere Modul das Laminieren der Rückseite desselben zu schützenden Produkts sichert, wobei jedes Laminiermodul aufweist:
· eine Auftragswalze (I), die die Folie auf das zu schützende Produkt ab ihrer unteren Achse laminiert und die die Folie durch elektrostatische Ladung auf der Auftragswalze hält;
· ein Schneidemodul (n) zum Zuschneiden der Folie im Kontakt mit der Auftragswalze (I) in einem Abstand von der unteren Achse der Auftragswalze, der äquivalent zum Abstand zwischen der unteren Achse der Auftragswalze und der hinteren Kante des zu schützenden Produkts plus Rand ist;
▪ einen Automaten mit einem Programm zur Steuerung der verschiedenen Module der Maschine in Abhängigkeit von der Größe der zu schützenden Produkte, wobei für jedes zu schützende Produkt der Automat steuert:
· die motorisierte Einführwalze (a) zur seitlichen Verlagerung des zu schützenden Produkts, um es zwischen den zwei Laminiermodulen (r) und (s) mit der Kante des zu schützenden Produkts in einem Abstand von der Achse der Auftragswalzen (I) zu positionieren, der äquivalent zu dem Rand ist, der frei bleiben muss, wobei die Kante der Folie in der Achse der Auftragswalzen (I) positioniert ist,
· die zwei Laminiermodule (r) und (s), um das Laminieren der Vorder- und Rückseite des zu schützenden Produkts zu gestatten,
· die motorisierte Einführwalze (a) zur seitlichen Verlagerung des zu schützenden Produkts, um das Laminieren seiner Vorder- und Rückseite zu sichern,
· die Auswurfwalze (e), um die hintere Kante des zu schützenden Produkts in einem Abstand von der Achse der Auftragswalze (l) zu positionieren, der äquivalent zum Abstand zwischen der unteren Achse der Auftragswalze und der Trennstelle plus Rand ist,
· das Schneidemodul zum Schneiden der Folie,
· die Auswurfwalze (e) zum Positionieren der hinteren Kante in einem Abstand von der Achse der Auftragswalze (l), der äquivalent zum Rand ist,
· und die zwei sich zur Freigabe des Produkts öffnenden Laminiermodule (r) und (s).

2. Industrielle Maschine nach Anspruch 1, **dadurch gekennzeichnet, dass** jedes Laminiermodul (r) und (s) aufweist:
▪ eine elektrostatische Ladungsstange (m), die mit einem Ladungsgenerator verbunden und in einem Abstand zwischen 5 und 25 mm von der Auftragswalze (I) positioniert ist, so dass die Folie an der Auftragswalze (I) bei genauer Beibehaltung ihrer Position anhaften kann;
▪ eine Umleitungswalze (o), die erlaubt, einen genauen Winkel zwischen der Folienspule und der Auftragswalze (I) beizubehalten;
▪ eine Gegenwalze aus Silikon (p), die die Kontaktfläche zwischen der Folie und der Auftragswalze (I) vergrößert, um die Folie unter der Ladungsstange zu positionieren und die Folie unter der Walze (I) zu halten;
▪ einen Folienspulenträgerdorn (q), der mit einem Abrollbremssystem ausgestattet ist.

3. Industrielle Maschine nach Anspruch 2, **dadurch gekennzeichnet, dass** das Vorderseiten-Laminiermodul (r) auf einem Zylinder mit einer linearen Führung (j) angebracht ist, um sich horizontal in dem Abstand zu positionieren, der in Abhängigkeit von der Dicke des zu schützenden Produkts notwendig ist und den adäquaten Laminierdruck auszuüben.

4. Industrielle Maschine nach Anspruch 1, **dadurch gekennzeichnet, dass** das auf einem Schwingarmsystem (k) bewegliche Rückseiten-Laminiermodul (s) zwei Positionen aufweist: eingefahren, wenn das Modul mit dem zu laminierenden Produkt nicht im Kontakt ist, ausgefahren, wenn am Nullpunkt positioniert, wobei die Auftragswalze (I) parallel und in der Verlängerung der Einführ- (a) und Auswurfwalzen (e) zum Laminieren des zu schützenden Produkts ist.

5. Verfahren zum Aufbringen von vorübergehenden oder permanenten Schutzfolien, das eine Maschine nach Anspruch 1 verwendet, **dadurch gekennzeichnet, dass** die automatisierte Steuerung der verschiedenen Module und Bauteile der Maschine in folgender Reihenfolge erfolgt:
▪ der Bediener legt als zu schützendes Produkt eine Scheibe ab und startet den Zyklus;
▪ das Glas verlagert sich zur Maschine, wobei diese von anderen Mitteln informiert wurde, die erlauben, die zur vollständigen Abdeckung der Scheibe notwendige Anzahl der Bahnen zu berechnen;
▪ die zwei Laminiermodule (r) und (s) positionieren sich in einer bestimmten Höhe derart, dass sich der untere Teil der Folienspule in der Höhe der unteren Kante der Scheibe plus Höhe des Randes befindet;
▪ das Glas verlagert sich seitlich, die Einführwalzen (a) und (b) schließen sich und positionieren die Scheibe zwischen den zwei Laminiermodulen (r) und (s) mit der Kante des Glases in einem Abstand von der Vertikalen der Achse der Auftragswalzen (I), der äquivalent zum Rand ist, der für die zukünftige Montage der Rahmen frei bleiben muss, wobei die Kante der Folie in der Achse der Auftragswalzen (I) positioniert ist;
▪ das Rückseiten-Laminiermodul (s) bewegt sich vorwärts, um sich am Nullpunkt in der Flucht der Einführ-(a) und (b) und Auswurfwalzen (e) und (f) im Kontakt mit dem Glas zu positionieren;
▪ das Vorderseiten-Laminiermodul (r) schleißt sich, wodurch die Auftragswalze (I) im Kontakt mit dem zu schützenden Glas positioniert wird;
▪ die Einführwalzen (a) und (b) verlagern das Glas seitlich, das Aufbringen der Folie erfolgt beiderseits;
▪ eine Zelle (d) ermittelt die hintere Kante des Glases, die Auswurfwalzen (e) und (f) übernehmen von den Einführwalzen (a) und (b) und positionieren das Glas mit der hinteren Kante in einem Abstand von der Achse der Auftragswalze (I), der äquivalent zum Abstand zwischen der unteren Achse der Auftragswalze und der Trennstelle plus Teil des Glases ist, das nicht laminiert bleiben muss;
▪ das Schneidemodul (n) setzt sich in Gang und schneidet die Folie;
▪ die Auswurfwalzen (e) und (f) positionieren das Glas mit der hinteren Kante in einem Abstand von der Achse der Auftragswalze (I), der äquivalent zu dem Rand ist, der nicht laminiert bleiben muss;
▪ die Laminiermodule (r) und (s) öffnen sich, das Glas fährt zurück, währenddessen sich dieselben Module in der richtigen Höhe positionieren, um das folgende Band aufzubringen;
▪ der Zyklus beginnt von vorn.

## Claims

1. An industrial machine for vertically applying temporary or permanent protective films, simultaneously on both plane surfaces of the front and rear faces of the products to be protected, having an automatic system for cutting the film, positioning it edge-to-edge or with a margin, and adapting automatically to changes in the format the machine comprising:
· An overall assembly provided with a system for conveying and positioning the product for protecting comprising;
o At least one motor-driven introducer roller (a) in a stationary position and at least one free introducer roller (b) that is horizontally movable, being actuated by actuators (c), the free introducer roller (b) being arranged symmetrically to the motor-driven introducer roller (a) in order to convey and position the product for protection at the inlet;
o At least one motor-driven ejector roller(e) in a stationary position and at least one free ejector roller (f) that is horizontally movable, being actuated by actuators (g), the free ejector roller (f) being arranged symmetrically to the motor-driven ejector roller in order to convey and position the product for protection at the outlet;
o A detector cell (d) after the introducer roller(s) (a) and (b) for determining the position of the product to be protected and from the rear edge of the product to be protected;
o Two vertical beams with linear guides (h) and two vertical mover assemblies (i) for vertically moving and positioning film-coating modules (r, s);
· Two film-coating modules (r) and (s) placed on linear guides of the structure to ensure their vertical and horizontal movements, one film-coating module for coating the front face of the product to be protected while the other film-coating module ensures the coating of the rear face of the same product to be protected, each film-coating module comprising;
o An applicator roller (1) that laminates the film onto the product to be protected from its lower axis and holds the film in position on the applicator roller by electrostatic charge;
o A cutter module (n) for cutting the film in contact with the applicator roller (1) at a distance from the lower axis of the applicator roller, equivalent to the distance between the lower axis of the applicator roller (1) and the rear edge of the product to be protected plus the margin;
· A controller with a program to control the various modules of the machine according to the size of the products to be protected, for each product to be protected, the controller controlling:.
o the motor-driven introducer roller (a) to laterally move the product to be protected in order to position it between the two film-coating modules (r) and (s), with the edge of the product to be protected at a distance from the axis of the applicator rollers (1), equivalent to the margin that must remain free, the edge of the film being positioned in the axis of the applicator rollers (1),
o the two film-coating modules (r) and (s) to allow the coating of the front and rear faces of the product to be protected,
o the motor-driven introducer roller (a) to laterally move the product to be protected in order to ensure the coating of its front and rear faces,
o the ejector roller (e) to position the rear edge of the product to be protected at a distance from the axis of the applicator roller (1), equivalent to the distance between the lower axis of the applicator roller and the cutting point, plus the margin,
o the cutter module for cutting the film,
o the ejector roller (e) to position the rear edge at a distance from the axis of the applicator roller (1) equivalent to the margin,
o the two film-coating modules (r) and (s) opening to release the product.

2. An industrial machine according to claim 1, **characterized in that** each film-coating module (r) and (s) is made up of:
· An electrostatic charge bar (m) connected to a charge generator and positioned at a distance lying in the range 5 mm to 25 mm from the applicator roller (1), enabling the film to adhere to the applicator roller (1) while conserving its position accurately;
· A deflector roller (o) serving to conserve an accurate angle between the roll of film and the applicator roller (1);
· A silicone backing roller (p) that increases the contact area between the film and the applicator roller (1) in order to position the film under the charge bar and hold the film against the roller (1);
· A spindle carrying the roll of film (q) fitted with an unwinding brake system.

3. An industrial machine according to claim 2, **characterized in that** the front face film-coating module (r) is mounted on an actuator with a linear guide (j) to take up a position horizontally at the distance that is necessary as a function of the thickness of the product to be protected and to apply the appropriate film-coating pressure.

4. An industrial machine according to claim 1, **characterized in that** the rear face film-coating module (s) that is movable on a linkage system (k) has two positions: a retracted position when the module is not in contact with the product to film-coat, an extended position when it is positioned at the zero point, the applicator roller (1) being parallel and in line with the introducer (a) and ejector (e) rollers in order to film-coat the product to be protected.

5. A method of applying temporary or permanent protective films using a machine according to claim 1, **characterized in that** the automatic control of the various modules and components of the machine operates in the following order:
· The operator places, as a product to be protected, a piece of glass and launches the cycle;
· The glass moves towards the machine, which has already been informed by other means enabling it to calculate the number of widths needed in order to completely cover the glass;
· The two film-coating modules (r) and (s) take up positions at a certain height so that the bottom portion of the roll of film is at the height of the bottom edge of the piece of glass plus the height of the margin;
· The glass moves sideways, the introducer rollers (a) and (b) close and position the piece of glass between the two film-coating modules (r) and (s), with the edge of the glass at a vertical distance from the axes of the applicator rollers (1), that is equivalent to the margin that must remain free for future mounting in the framework, the edge of the film being positioned on the axis of the applicator rollers (1);
· The rear face film-coating module (s) advances to become positioned at the zero point, in alignment with the introducer and ejector rollers (a, b and e, f), in contact with the glass;
· The front face film-coating module (r)closes, positioning the applicator roller (1) in contact with the glass to be protected;
· The introducer rollers (a) and (b) move the glass sideways, the film being applied on both sides;
· A cell (d) detects the rear edge of the glass, the ejector rollers (e) and (f) take over from the introducer rollers (a) and (b) and position the glass with its rear edge at a distance from the axis of the applicator roller (1) that is equivalent to the distance between the lower axis of the applicator roller and the cutting point plus the portion of the glass that is to remain without film coating;
· The cutter module (n) goes into operation and cuts the film;
· The ejector rollers (e) and (f) position the glass with its rear edge at a distance from the axis of the applicator roller (1) that is equivalent to the margin that is to remain without film coating;
· The film-coating modules (r) and (s)open, the glass moves backwards while the same modules take up positions at the appropriate height for applying the following strip.
· The cycle starts again.
